# EUROPEAN PATENT SPECIFICATION

(11) **EP 3 206 120 B1**
(45) Date of publication and mention of the grant of the patent: **16.06.2021**
(21) Application number: 17155373.8
(22) Date of filing: 09.02.2017
(51) Int. Cl.: H04N 1/00, G06F 3/12, H04N 1/32, H04N 1/44

(54) **INFORMATION PROCESSING SYSTEM, INFORMATION MANAGING APPARATUS, AND INFORMATION PROCESSING METHOD**
INFORMATIONSVERARBEITUNGSSYSTEM, INFORMATIONSVERWALTUNGSVORRICHTUNG UND INFORMATIONSVERARBEITUNGSVERFAHREN
SYSTÈME DE TRAITEMENT D'INFORMATIONS, APPAREIL DE GESTION D'INFORMATIONS ET PROCÉDÉ DE TRAITEMENT D'INFORMATIONS

(30) Priority: 10.02.2016 JP 2016024005
(43) Date of publication of application: 16.08.2017
(73) Proprietor: Ricoh Company, Ltd., Tokyo 143-8555 (JP)
(72) Inventor: TETSUHIKO, Omori, Ohta-ku, Tokyo 143-8555 (JP)
(74) Representative: Watkin, Timothy Lawrence Harvey

(56) References cited:
- EP-A2- 2 703 997
- JP-A- 2013 159 107

## Description

### BACKGROUND

### Technical Field

The present invention relates to an information processing system, an information managing apparatus, and an information processing method.

### Background Art

Pull-print systems without servers that print data is stored in a user terminal by user operation, a printer requests the user terminal to transfer a print job list, the printer selects an intended print job from the transferred print job list, the printer requests the user terminal to transfer the selected print data, and the printer prints out the transferred print data are known.

In addition, using the pull-print systems without servers, a technology that a different user (proxy user) may perform printing (i.e., performing printing by proxy) instead of a user (proxy request user) who stored the print data in the user terminal is known (e.g., JP-2013-159107-A).

By enabling to perform printing by the proxy user, even if the proxy request user cannot output the print data for some reason, the proxy user may output the intended print data. As a result, it is possible to enhance user-convenience of the printers. In performing printing by proxy, after it is preliminarily authenticated that the user who performs printing is designated as the proxy user by the proxy request user, the print data is output. Therefore, it is possible to prevent non-authenticated users from outputting the print data, and it is possible to ensure security.

EP 2 703 997 A2 discloses an apparatus and system for controlling output of data.

### SUMMARY

The invention proposes an information management apparatus as defined by claim 1, and an information processing method according to claim 10.

Example embodiments of the present invention provide a novel information managing apparatus.

Further example embodiments of the present invention provide an information processing system and a method of processing information.

In the embodiments described below, a print information management system that may enhance user-friendliness of an output apparatus ensuring security is provided.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a diagram illustrating a configuration of a print processing system as an embodiment of the present invention;
FIG. 2 is a diagram illustrating a hardware configuration of a multifunction peripheral (MFP) as an embodiment of the present invention;
FIG. 3 is a diagram illustrating a hardware configuration of a user terminal and a print information management apparatus as an embodiment of the present invention;
FIG. 4 is a diagram illustrating functional blocks of the MFP as an embodiment of the present invention;
FIG. 5 is a diagram illustrating functional blocks of the user terminal as an embodiment of the present invention;
FIG. 6 is a diagram illustrating functional blocks of the print information management apparatus as an embodiment of the present invention;
FIG. 7 is a diagram illustrating a proxy management table as an embodiment of the present invention;
FIG. 8 is a diagram illustrating a user terminal management table as an embodiment of the present invention;
FIG. 9 is a diagram illustrating a location information management table as an embodiment of the present invention;

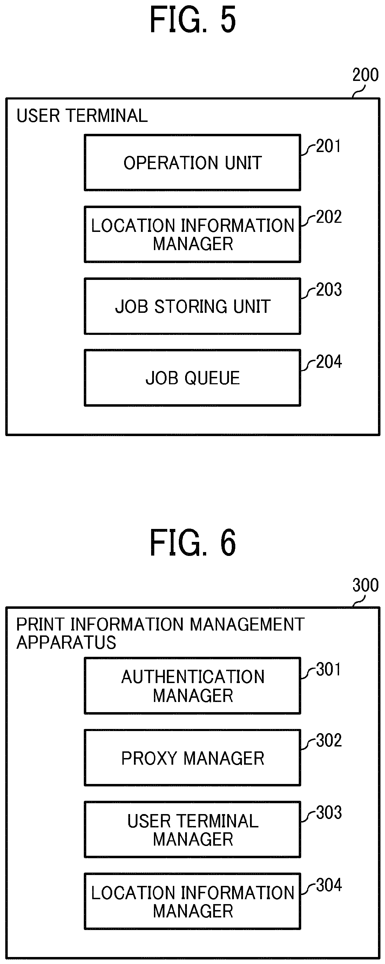

FIG. 6 is a diagram illustrating functional blocks of the print information management apparatus as an embodiment of the present invention;

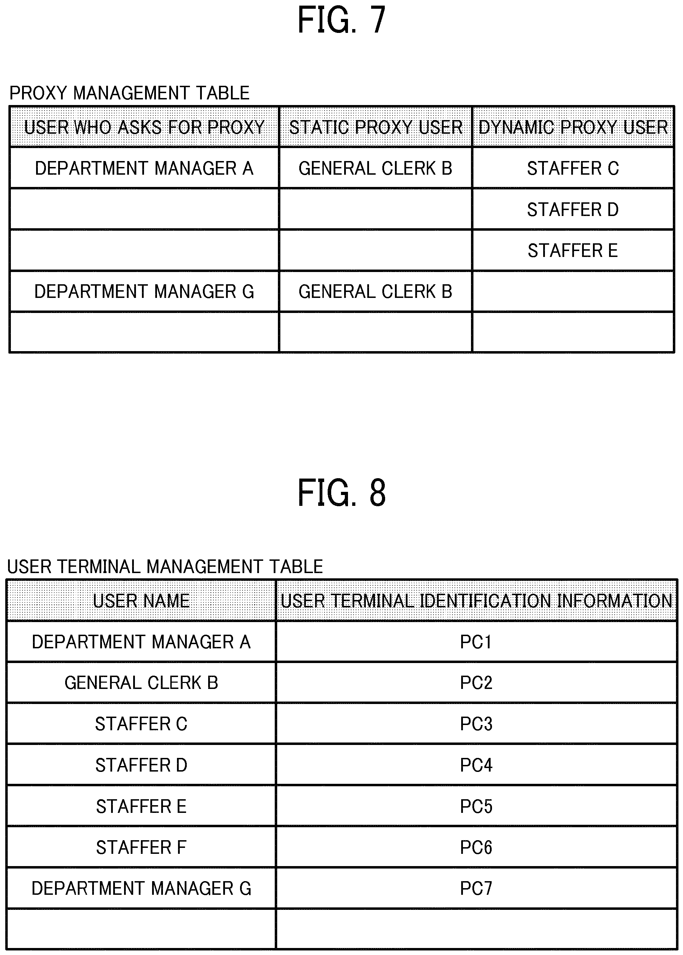

FIG. 7 is a diagram illustrating a proxy management table as an embodiment of the 5 present invention;
FIG. 8 is a diagram illustrating a user terminal management table as an embodiment of the present invention;

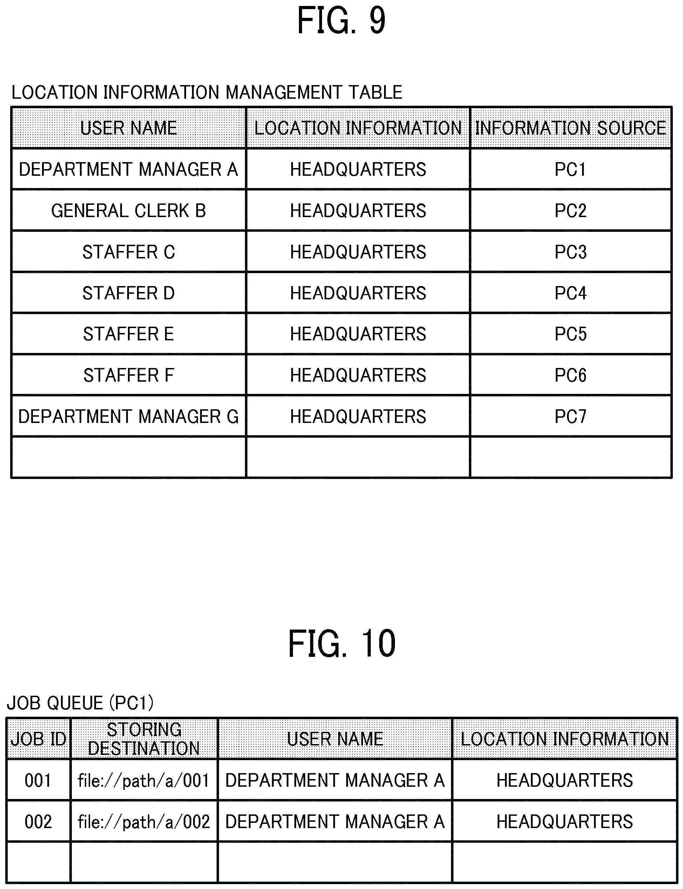

FIG. 9 is a diagram illustrating a location information management table as an embodiment of the present invention;
FIG. 10 is a diagram illustrating a job table as an embodiment of the present invention;

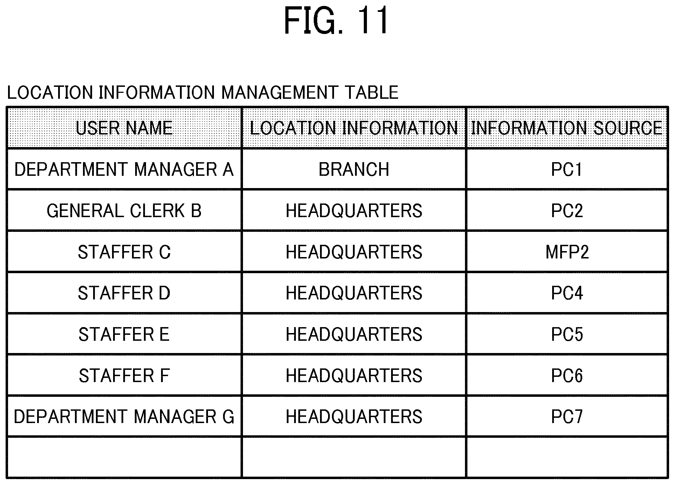

FIG. 11 is a diagram illustrating an updated location information management table as an embodiment of the present invention;

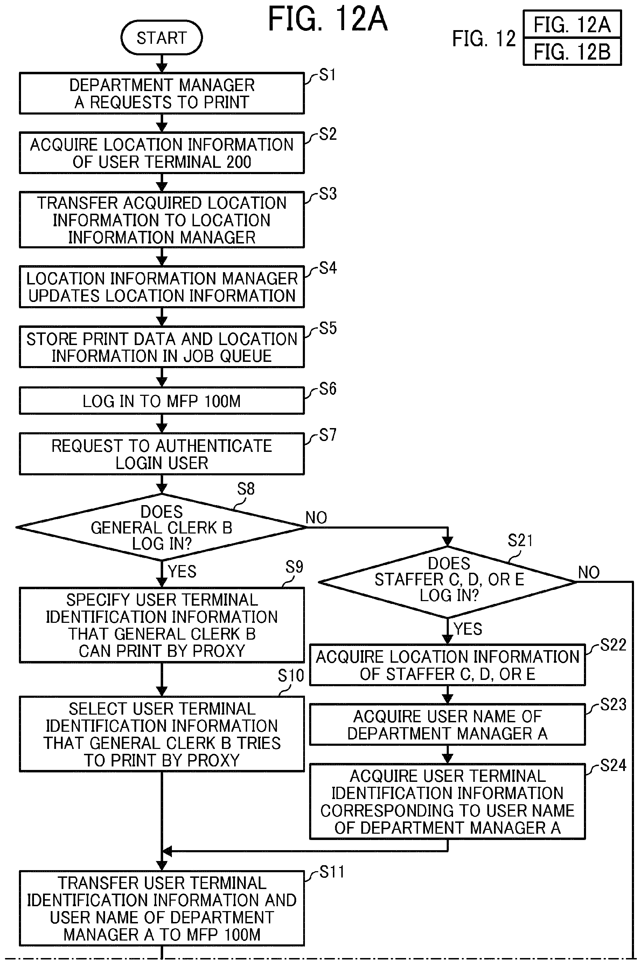

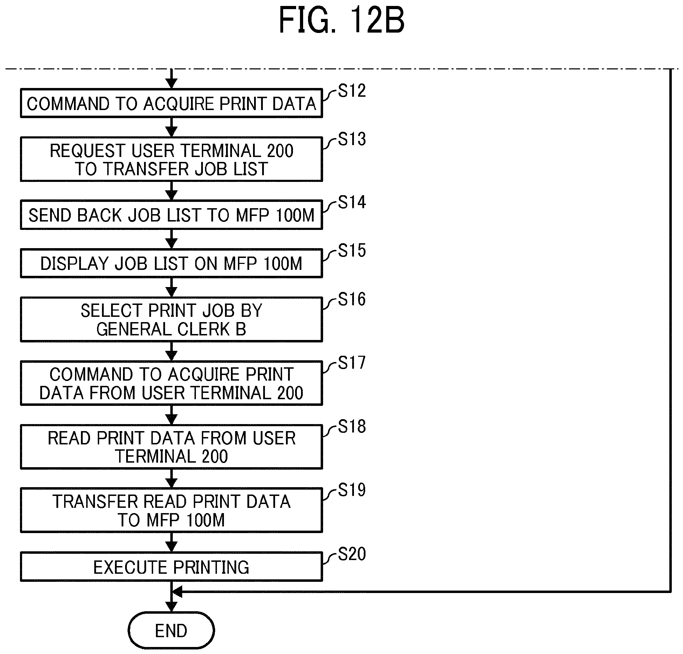

FIGs. 12A and 12B are flowcharts illustrating an operation of the print information management system that performs proxy printing at a headquarters;
FTGs. 13A and 13B are flowcharts illustrating an operation of the print information management system that performs proxy printing at a branch;

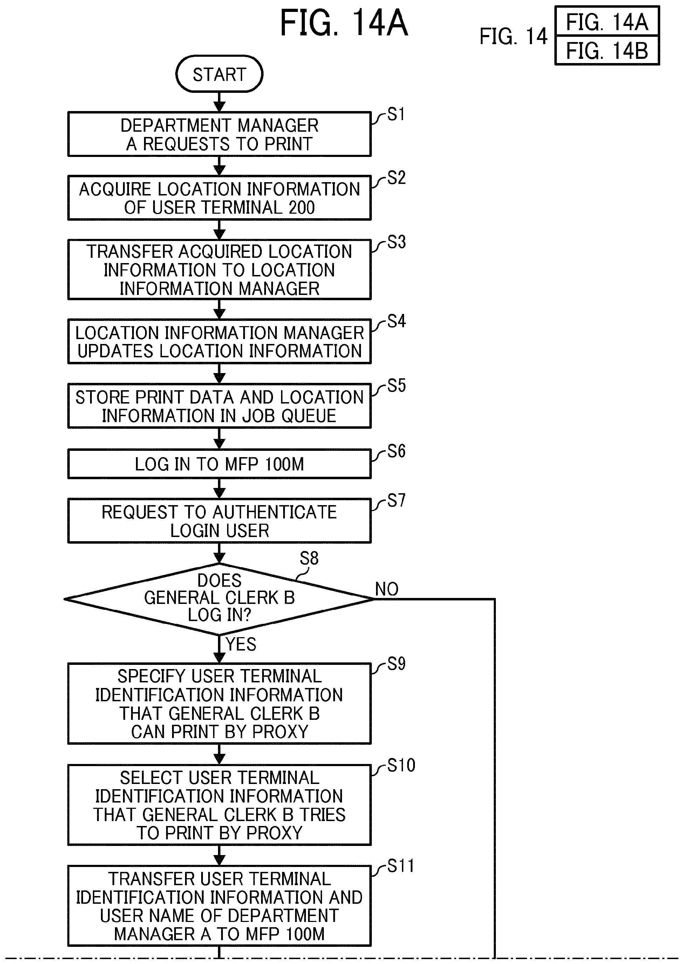

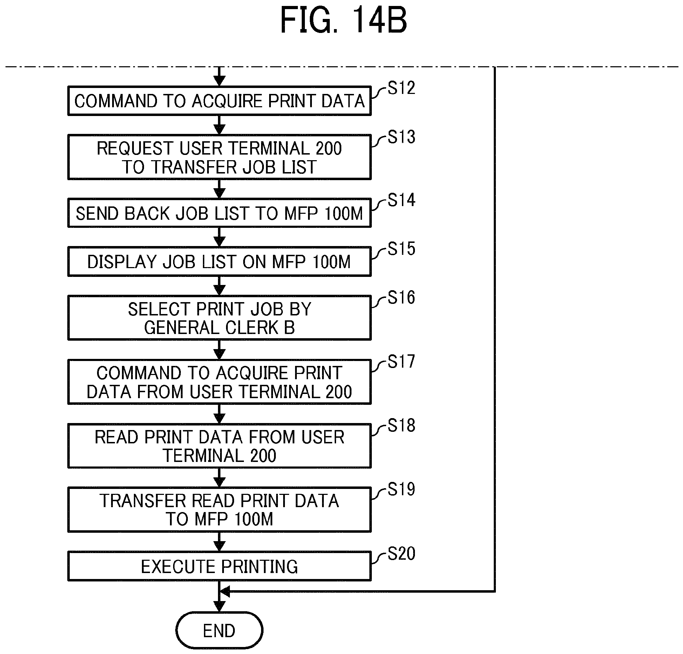

FIGs. 14A and 14B are flowcharts illustrating an operation of the print information management system that performs proxy printing at a headquarters;

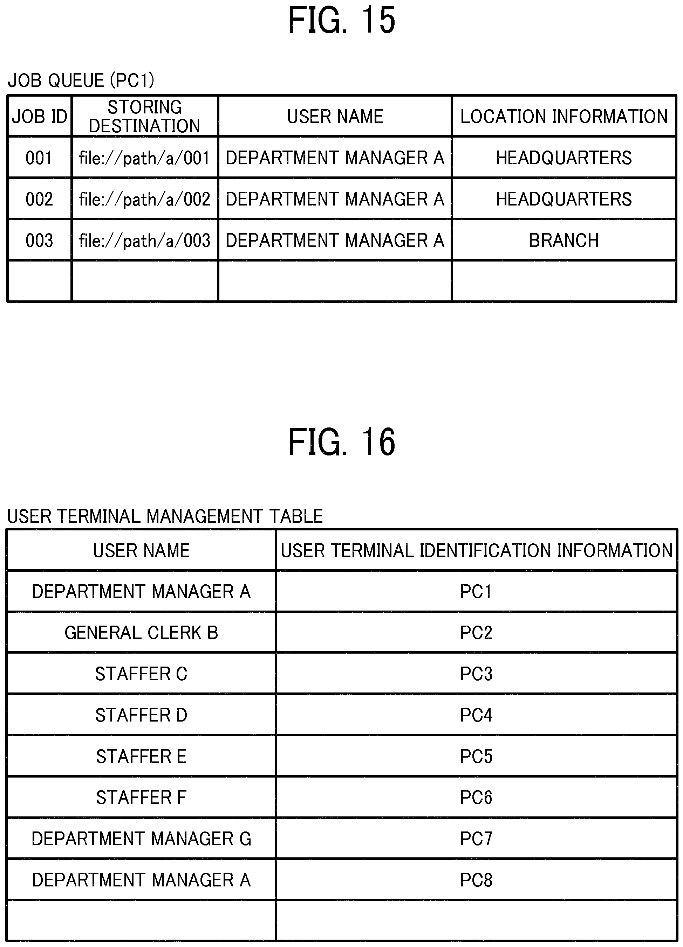

FIG. 15 is a diagram illustrating a job table as an embodiment of the present invention;
FIG. 16 is a diagram illustrating a user terminal management table as an embodiment of the present invention, and

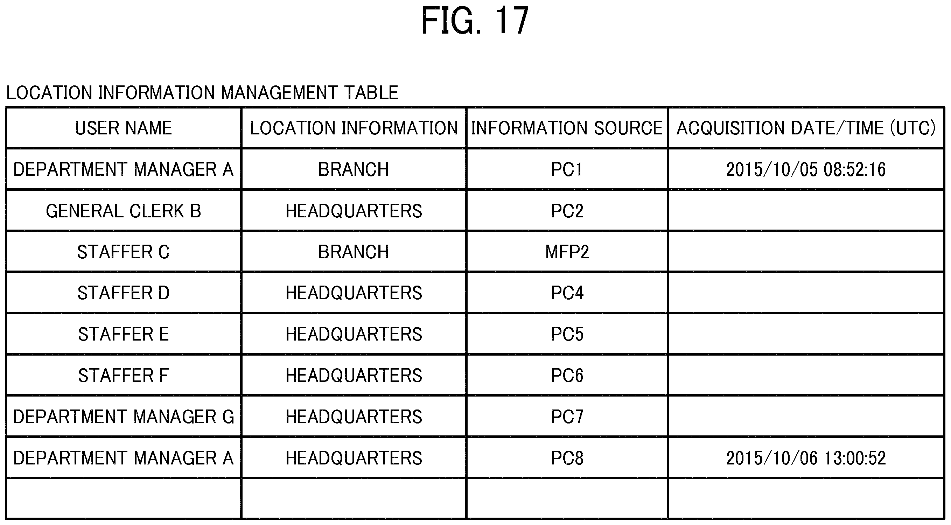

FIG. 17 is a diagram illustrating a location information management table as an embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing embodiments illustrated in the drawings, specific terminology is employed for the sake of clarity.

A more complete appreciation of the disclosure and many of the attendant advantages thereof will be readily obtained as the same becomes better understood by reference to the following detailed description when considered in conjunction with the accompanying drawings.

Embodiments of the present invention are described below in detail with reference to figures. In figures, same symbols are assigned to same or corresponding parts, and their descriptions are simplified or omitted appropriately.

While the print information management system is described below, the embodiments are not limited to the print information management system. The embodiments may be applied to other information management systems that job data is stored by user operation and the job data is output using an output apparatus by proxy user operation, as covered by the claims.

Examples of other information management systems are an information management system that outputs the job data stored by user operation using a projecting apparatus such as a projector, outputs the job data using a display apparatus such as a monitor, and outputs the job data using a sound output apparatus such as an audio apparatus.

In the information management system in this embodiment, a proxy user is specified in accordance with location information of the proxy request user and location information of the proxy user designated by the proxy request user, and it is possible to acquire a required output.

To achieve the result, as the proxy user who performs printing print data stored in a user terminal used by the proxy request user by proxy, the proxy request user configures a dynamic proxy user who determines whether or not the proxy printing may be performed depending on location information corresponds to location information of the proxy request user. In addition to the dynamic proxy user, the proxy request user may configure a static proxy user who may always perform proxy printing regardless of the location information of the proxy request user or the location information of the proxy user.

In the print information management system in this embodiment, after accepting a request for authentication of a user from a printer and the user authentication succeeds, it is determined whether the user who requested for authentication is the static proxy user or the dynamic proxy user, and the most appropriate proxy user in relationship with the location information of the proxy request user performs printing the print data. As a result, by ensuring security, it is possible to acquire the print data required by the proxy request user.

### System configuration

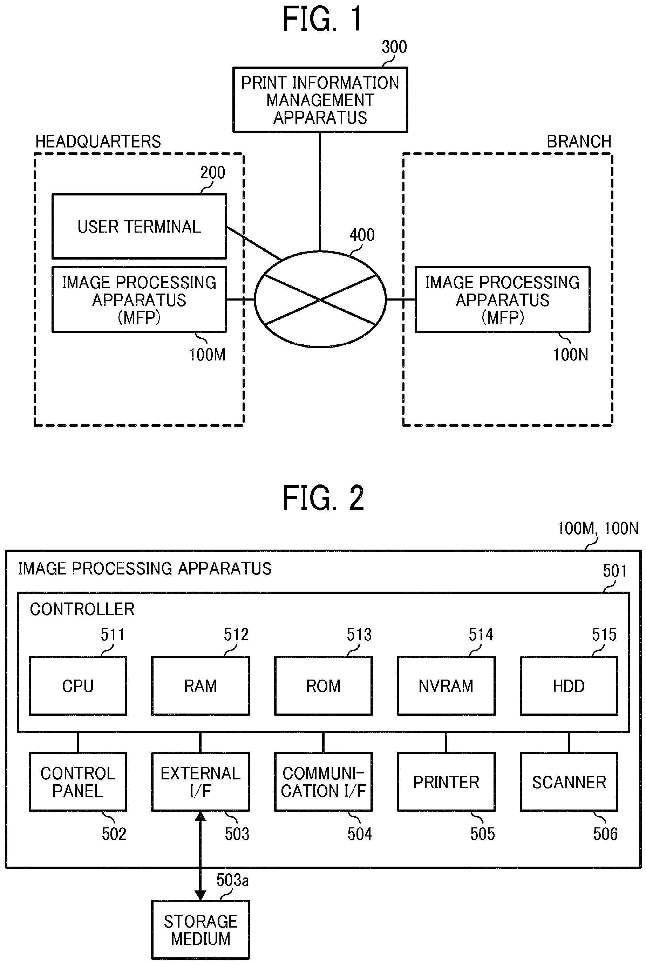

Next, a system configuration of the print information management system in this embodiment is described below with reference to FIG. 1.

As illustrated in FIG. 1, in the print information management system in this embodiment, an image processing apparatus (information processing apparatus) 100M located at a location M, an image processing apparatus (information processing apparatus) 100N located at a location N, a user terminal 200 used by the proxy request user, and a print information management apparatus 300 that specifies the proxy user who performs printing by proxy in accordance with the request for authentication from the image processing apparatuses 100M and 100N are connected with each other via a network 400 such as an intranet etc.

In FIG. 1, the print information management apparatus 300 is an external server separate from the image processing apparatuses 100M and 100N. However, it is possible to implement functions of the print information management apparatus 300 in both of the image processing apparatuses 100M and 100N or either one of the image processing apparatuses 100M and 100N.

In addition, in FIG. 1, the image processing apparatus 100M is located in the headquarters and the image processing apparatus 100N is located in the branch. However, the number of locations where the image processing apparatus is located is not limited to two. Furthermore, the number of image processing apparatuses that are installed at each are is not limited to one. That is, in this embodiment, it is possible to install one or more image processing apparatuses at two or more locations.

As the image processing apparatuses 100M and 100N, multifunction peripherals (MFPs) that compositely include at least two or more functions such as a printer, copier, and facsimile etc. In this embodiment, a case that the MFPs are used as the image processing apparatuses 100M and 100N is taken as an example. As a result, in the below description, the image processing apparatuses 100M and 100N are referred to as the MFPs 100M and 100N. It is assumed that the MFPs 100M and 100N and users who utilizes the MFPs 100M and 100N belong to a group such as a department etc.

The user terminal 200 is an information processing apparatus used for creating a document and an image by user operation. As the user terminal 200, it is possible to use a smartphone, a cellphone, a tablet device and a personal computer (PC) etc. In this embodiment, the user terminal 200 stores print data generated by user operation in a job queue.

### Hardware configuration

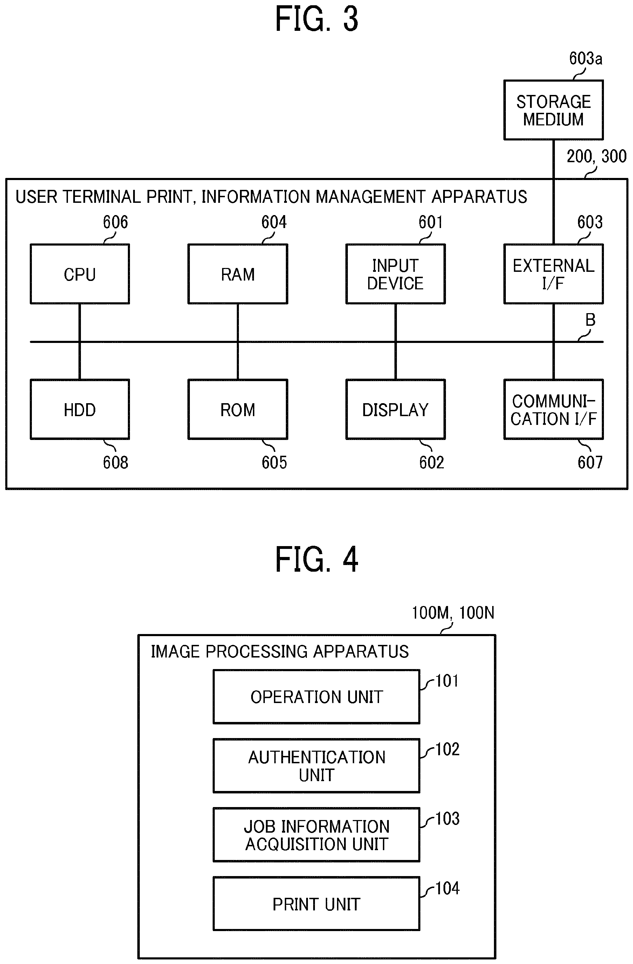

Next, a hardware configuration of the print information management system in this embodiment is described below with reference to FIGS 2 and 3.

The MFPs 100M and 100N are implemented by computers that include a hardware configuration illustrated in FIG. 2. As illustrated in FIG. 2, the MFPs 100M and 100N in this embodiment includes a controller 501, a control panel 502, an external I/F 503, a communication I/F 504, a printer 505, and a scanner 506.

The controller 501 includes a central processing unit (CPU) 511, a random access memory (RAM) 512, a read only memory (ROM) 513, a nonvolatile RAM (NVRAM) 514, and a hard disk drive (HDD) 515. The ROM 513 stores various programs and data. The RAM 512 temporarily stores the programs and data. For example, the NVRAM 514 stores configuration information etc. In addition, the HDD 515 stores various programs and data.

The CPU 511 controls the entire MFPs 100M and 100N and implements functions of the MFPs 100M and 100N by reading programs, data, and configuration information etc. from the ROM 513, the NVRAM 514, and the HDD 515 etc. into the RAM 512 and performing operations.

The control panel 502 includes an input device that accepts user operation and a display that displays various information. The external I/F 503 is an interface with an external apparatus. A storage medium 503a is an example of the external apparatus. As a result, the MFPs 100M and 100N can read/write data from/to the storage medium 103a via the external I/F 503. Examples of the storage medium 503a are an IC card, a flexible disk, a Compact Disc (CD), a Digital Versatile Disk (DVD), a SD memory card, and a Universal Serial Bus (USB) memory etc.

The communication I/F 504 is an interface that connects the MFPs 100M and 100N to the network 400. Accordingly, the MFPs 100M and 100N can communicate data with the external apparatus via the communication I/F 504. The printer 505 prints print data on paper. The scanner 506 scans image data from a document.

The user terminal 200 and the print information management apparatus 300 in FIG. 1 are implemented by computers etc. that include a hardware configuration illustrated in FIG. 3. As illustrated in FIG. 3, in this embodiment, the user terminal 200 and the print information management apparatus 300 includes an input device 601, an display 602, an external I/F 603, a RAM 604, a ROM 605, a CPU 606, a communication I/F 607, and a HDD 608, and those components are connected with each other via a bus B. The input device 601 and the display 602 may be connected and used as needed.

The input device 601 includes a keyboard and a mouse etc. and various operating signals are input into the input device 601 by user operation. The display 602 includes a display device etc. and displays a result of operations performed by the user terminals 200A and 200B and the print information management apparatus 300.

The communication I/F 607 is an interface that connects the user terminal 200 and the print information management apparatus 300 to the network 400. By including the communication I/F 607, the user terminals 200A and 200B and the print information management apparatus 300 may exchange data with the MFPs 100M and 100N connected to the network 400.

The HDD 608 is a nonvolatile storage device that stores programs and data. Examples of programs or data stored in the HDD 608 may include an operating system (OS) for controlling the user terminal 200 and the print information management apparatus 300 or application software providing various functions on the OS.

The external I/F 603 is an interface with an external apparatus. A storage medium 603a is an example of the external apparatus. By including the external I/F 603, the user terminal 200 and the print information management apparatus 300 may read data from the storage medium 603a and write data in the storage medium 603a. Examples of the storage medium 603a are a flexible disk, a Compact Disc (CD), a Digital Versatile Disk (DVD), a SD memory card, and a Universal Serial Bus (USB) memory etc.

The ROM 605 is a nonvolatile semiconductor memory (a storage device) that can keep programs and data after cutting power off. The ROM 605 stores programs and data such as BIOS, OS settings, and network settings executed at boot-up of the user terminal 200 and the print information management apparatus 300. The RAM 604 is a volatile semiconductor memory, which temporarily holds programs or data.

The CPU 606 controls the user terminal 200 and the print information management apparatus 300 and implements functions of the user terminal 200 and the print information management apparatus 300 by reading programs and data from storage devices such as the ROM 605 and the HDD 608 etc. into the RAM 604 and performing operations.

### Functional configuration

Next, a functional configuration of the print information management system in this embodiment is described below with reference to FIGs. 4 to 6.

For example, the MFPs 100M and 100N in this embodiment may be implemented by functional blocks illustrated in FIG. 4. That is, the MFPs 100M and 100N in this embodiment implement an operation unit 101, an authentication unit 102, a job information acquisition unit 103, and a print unit 104 by executing a program. Operations of the operation unit 101, authentication unit 102, job information acquisition unit 103, and print unit 104 that construct the MFPs 100M and 100N are described later in detail with reference to a flowchart.

For example, the user terminal 200 in this embodiment may be implemented by functional blocks illustrated in FIG. 5. That is, by executing a program, the user terminal 200 in this embodiment implements an operation unit 201, a location information manager 202, a job storing unit 203, and a job queue 204. Operations of the operation unit 201, location information manager 202, job storing unit 203, and job queue 204 that construct the user terminal 200 is described later in detail with reference to a flowchart.

For example, the print information management apparatus 300 in this embodiment may be implemented by functional blocks illustrated in FIG. 6. That is, the print information management apparatus 300 in this embodiment implements an authentication manager 301, a proxy manager 302, a user terminal manager 303, and a location information manager 304. Operations of the authentication manager 301, proxy manager 302, user terminal manager 303, and location information manager 304 that construct the print information management apparatus 300 is described later in detail with reference to a flowchart.

### User configuration

Next, a method of configuring a user in the print information management system in this embodiment is described below with reference to FIGs. 7 to 11. In this embodiment, a department manager A who belongs to the headquarters is a proxy request user, and it is assumed to configure a proxy user who performs printing by proxy at the headquarters and a proxy user who performs printing by proxy at the branch where the department manager visits on business.

First, a configuration of the proxy user who performs printing by proxy at the headquarters is described below with reference to FIGs. 7 to 10.

A proxy management table 701 in FIG. 7 is stored in the proxy manager 302 in the print information management apparatus 300. A user terminal management table 702 in FIG. 8 is stored in the user terminal manager 303 in the print information management apparatus 300. A location information management table 703 in FIG. 9 is stored in the location information manager 304 in the print information management apparatus 300. A job table 704 in FIG. 10 is stored in the job queue 204 in the user terminal 200.

As illustrated in FIG. 7, in the proxy management table 701, the department managers A and G are registered in the proxy management table 701 as the proxy request user. The department manager A designates a general clerk B who belongs to a location M as a static proxy user and a members C, D, and E who belong to the headquarters as a dynamic proxy user. By contrast, the department manager G only designates a general clerk B who belongs to the headquarters as the static proxy user and does not designate the dynamic proxy user.

As illustrated in FIG. 8, in the user terminal management table 702, corresponding to user names such as the department manager A, general clerk B, members C, D, E, and F, and the department manager G, host names, i.e., PC 1, PC 2, PC 3, PC 4, PC 5, PC 6, and PC 7, are registered as user terminal identification information for user terminals used by the users described above for drafting a document etc. In addition, information for identifying the user terminal in the network such as IP address of the user terminal may be registered.

As illustrated in FIG. 9, in the location information management table 703, "the headquarters" is registered as location information corresponding to user names such as the department manager A, general clerk B, members C, D, E, and F, and department manager G. In addition, in the location information management table 703, corresponding to user names such as the department manager A, general clerk B, members C, D, E, and F, and department manager G, host names, i.e., PC 1, PC 2, PC 3, PC 4, PC 5, PC 6, and PC 7, are registered as a source of the location information.

In FIG. 9, it is illustrated that each of the department manager A, general clerk B, members C, D, E, and F, and department manager G acquires the location information "the headquarters" from their own user terminals 200 whose host names are PC 1, PC 2, PC 3, PC 4, PC 5, PC 6, and PC 7.

That is, after each of the department manager A, general clerk B, members C, D, E, and F, and department manager G logs in their own user terminal 200, a request to acquire location information is transferred from the operation unit 201 to the location information manager 202 in the user terminal 200 that the user logs in. After receiving the request to acquire location information, the location information manager 202 acquires location information of each of the user terminals 200 from GPS included in the user terminal 200, IP address allocated to the user terminal 200, and a locale function implemented in the user terminal 200 to update location information of each user terminal 200 that the location information manager 202 manages. As a result, in FIG. 9, "the headquarters" is registered as the location information of the department manager A, general clerk B, members C, D, E, and F, and department manager G.

It should be noted that the source of the location information is not only the user terminal 200 but also a device that may specify the user location information and its own location information. For example, the MFPs 100M and 100N may also be registered as the source of the location information.

As illustrated in FIG. 10, in the job table 704, a print job whose job ID is indicated as 001 and a print job whose job ID is indicated as 002 are stored. Corresponding to the job ID 001, a storing destination of the print job "file://path/a/001", user name "department manager A", and location information "headquarters" are registered. Corresponding to the job ID 002, a storing destination of the print job "file://path/a/002", user name "department manager A", and location information "headquarters" are registered.

In this case, the general clerk B is designated as the static proxy user for the department manager A as the proxy request user, and members C, D, and E are designated as the dynamic proxy user for the department manager A. Since all location information of the department manager A, general clerk B, members C, D, and E indicate the headquarters, the general clerk B and members C, D, and E may perform printing print data corresponding to the job IDs 001 and 002 registered by the department manager A using the MFP 100M located at the headquarters.

As a result, even if the department manager A as the proxy request user cannot perform printing the print data corresponding to the job IDs 001 and 002, the department manager A may acquire an intended print output for sure.

However, if the proxy management table 701, user terminal management table 702, location information management table 703, and job queue 731 remain to be configured as illustrated in FIGs. 7 to 10, the department manager A as the proxy request user cannot directly perform printing print data corresponding to the job IDs 001 and 002 using the MFP 100N located at the branch where the department manager A visits on business, and the department manager A cannot acquire the intended print output.

To cope with that issue, in the print information processing system in this embodiment, when the department manager A as the proxy request user visits the branch on business, the location information management table stored in the location information manager 304 in the print information management apparatus 300 is updated as illustrated in the location information management table 722 illustrated in FIG. 11. As a result, it is possible to perform printing print data corresponding to the job IDs 001 and 002 using the direct MFP 100N located at the branch.

That is, the location information of the department manager A as the proxy request user is changed into "the branch". In addition, the location information of the member C is changed into "the branch". Furthermore, the source of the location information of the member C is changed into the MFP 100N. The proxy management table 701, user terminal management table 702, and the job table 704 remain the same as illustrated in FIGs. 7, 8, and 10. It should be noted that the member C also visits the branch on business along with the department manager A.

As a result, it is possible to harmonize the location information of the department manager A as the proxy request user with the location information of the member C as the dynamic proxy user and the location information of the MFP 100N. Therefore, the member C may perform printing print data corresponding to the job IDs 001 and 002 by proxy using the MFP 100N.

Flow of operation performed by the print information processing system at the headquarters

An operation performed by the print information management system at the headquarters is described below with reference to FIGs. 12A and 12B.

In performing printing by proxy, the proxy manager 302 in the print information management apparatus 300 stores the proxy management table 701 illustrated in FIG. 7, the user terminal manager 303 stores the user terminal management table 702 illustrated in FIG. 8, and the location information manager 304 stores the location information management table 703 in FIG. 9 respectively. In addition, the job table 704 illustrated in FIG. 10 is stored in the job queue 204 in the user terminal 200.

In this state of things described above, after the department manager A as the proxy request user logs in the user terminal 200 and requests to print in S1, the user terminal 200 acquires its own location information in S2 and transfers the acquired location information to the location information manager 304 in the print information management apparatus 300 in S3. Accordingly, the location information manager 304 updates the location information of the user terminal 200 in S4. As illustrated in FIG. 9, the location information of the user terminal 200 is set to "the headquarters".

After acquiring the location information of the user terminal 200, the operation unit 201 in the user terminal 200 adds the location information acquired by the location information manager 202 to the print data generated by the department manager A and stores the added data in the job queue 204 in the user terminal 200 in S5.

In this state of things described above, after a user who belongs to the headquarters (i.e., the general clerk B as the static proxy user, the members C, D, and E, and other users are included) logs in the MFP 100M located at the headquarters by inputting a user name and password on the operation unit 101 by user operation in S6, the operation unit 101 in the MFP 100M transfers a request for authentication to the authentication unit in the MFP 100M, and the authentication unit 102 transfers the request for authentication to the authentication manager 301 in the print information management apparatus 300 to request to authenticate the login user in S7.

If the authentication succeeds in S7, the operation proceeds to S8, and it is determined whether or not the user who logged in the operation unit 101 of the MFP 100M is the static proxy user. In the determination, after a name of the authenticated user is transferred from the authentication manager 301 in the print information management apparatus 300 to the proxy manager 302, based on the proxy management table 701 in FIG. 7, the proxy manager 302 determines whether the user whose name was transferred is the general clerk B, member C, D, E, or another user.

If it is determined that the user who logged in the operation unit 101 of the MFP 100M is the static proxy user (i.e., the general clerk B) (YES in S8), the operation proceeds to S9, and user terminal identification information of a proxy request user who designates the general clerk B as the static proxy user is specified. In the specification of the user terminal identification information, after a name of the proxy request user who designates the general clerk B as the static proxy user is transferred from the authentication manager 301 in the print information management apparatus 300 to the user terminal manager 303, the user terminal manager 303 specifies the user terminal identification information based on the user terminal management table 702 illustrated in FIG. 8. In FIG. 7, the department managers A and G designate the general clerk B as the static proxy user, the user terminal identification information PC 1 of the department manager A and the user terminal identification information PC 7 of the department manager G are specified.

After specifying the user terminal identification information of the proxy request user, the general clerk B selects either the user terminal identification information PC 1 of the department manager A or the user terminal identification information PC 7 of the department manager G in S10. In this embodiment, it is assumed that the general clerk B selects the user terminal identification information PC 1 of the department manager A. In this case, the user terminal manager 303 transfers the user terminal identification information PC 1 of the department manager A and the user name of the department manager A to the authentication unit 102 of the MFP 100M in S11. Accordingly, the authentication unit 102 in the MFP 100M requests the job information acquisition unit 103 in the MFP 100M to acquire print data in S12.

After being requested to acquire print data, the job information acquisition unit 103 accesses the job queue 204 in the user terminal 200 and requests the user terminal 200 to transfer a job list in S13. Accordingly, the job queue 204 in the user terminal 200 returns the job list including a job ID to the job information acquisition unit 103 in the MFP 100M in S14.

After receiving the job list including the job ID, the job information acquisition unit 103 displays the job list of the department manager A on the operation unit 101 of the MFP 100M in S15. With reference to the job list displayed on the operation unit 101, the general clerk B may select an intended print job.

After the general clerk B selects the intended print job in S16, the operation unit 101 of the MFP 100M requests the job information acquisition unit 103 in the user terminal 200 to acquire print data corresponding to the job ID selected by the general clerk B in S17. The job information acquisition unit 103 access the job queue 204 in the user terminal 200A to read the print data corresponding to the job ID in S 18 and transfers the read print data to the print unit 104 in the MFP 100M in S19.

After receiving the print data, the print unit 104 performs printing the print data corresponding to the job ID in S20. As a result, the general clerk B may acquire an output of the print data requested by the department manager A.

If it is determined that the user who logged in the operation unit 101 of the MFP 100M is not the static proxy user (i.e., the general clerk B) (NO in S8), the operation proceeds to S21, and it is determined whether or not the user who logged in the operation unit 101 of the MFP 100M is the dynamic proxy user.

If it is determined that the user who logged in the operation unit 101 of the MFP 100M is the dynamic proxy user (i.e., member C, D, or E) (YES in S21), the operation proceeds to S22, and location information corresponding to the name of the dynamic proxy user who logged in the operation unit 101 of the MFP 100M is acquired. In the acquisition, after the authentication manager 301 in the print information management apparatus 300 transfers the name of the dynamic proxy user to the location information manager 304, the location information manager 304 specifies the name of the dynamic proxy user based on the location information management table 703 in FIG. 9. The acquired location information is returned to the authentication manager 301.

Next, the operation proceeds to S23, and a name of the proxy request user whose location information corresponds to location information corresponding to the acquired name of the dynamic proxy user. In acquiring the user name, the authentication manager 301 in the print information management apparatus 300 transfers the location information of the dynamic proxy user to the location information manager 304, and the location information manager 304 specifies the name of the proxy request user whose location information corresponds to the transferred location information of the dynamic proxy user based on the proxy management table 701 in FIG. 7. In this embodiment, the members C, D, and E are designated as the dynamic proxy users for the department manager A. Therefore, the user name of the department manager A is specified. The acquired user name is returned to the authentication manager 301.

Next, the operation proceeds to S24, the user terminal identification information PC 1 corresponding to the acquired user name is acquired, and the operation proceeds to S11. In acquiring the user terminal identification information PC 1, after the authentication manager 301 in the print information management apparatus 300 transfers the acquired user name to the user terminal manager 303, the user terminal manager 303 specifies user terminal identification information corresponding to the transferred user name based on the user terminal management table 702 in FIG. 8.

If it is determined that the user who logged in the MFP 100M is not the dynamic proxy user in S21, the operation ends as is.

The print information processing system in this embodiment performs the operation as described above. As a result, at the headquarters, all of the members C, D, and E may acquire the print output requested by the department manager A.

Flow of operation performed by the print information processing system at the branch

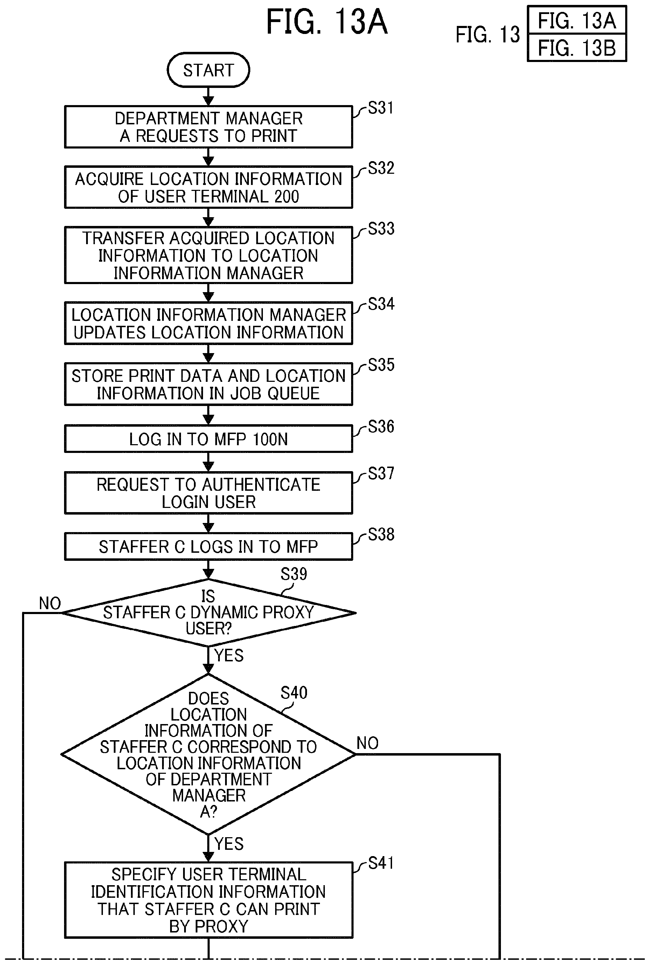

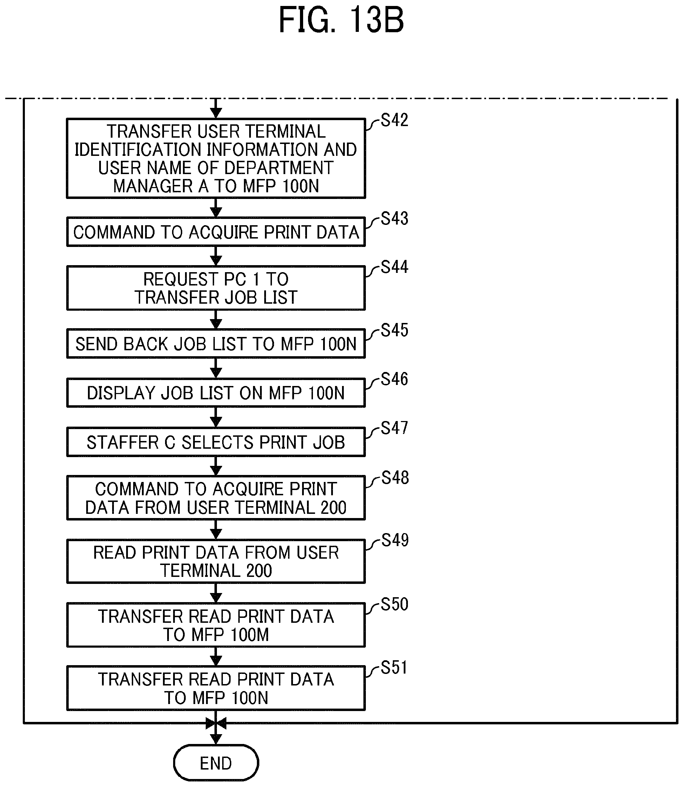

An operation performed by the print information management system at the branch is described below with reference to FIGs. 13A and 13B. In this embodiment, the proxy manager 302 in the print information management apparatus 300 stores the proxy management table 701 illustrated in FIG. 7, the user terminal manager 303 stores the user terminal management table 702 illustrated in FIG. 8, and the location information manager 304 stores the location information management table 711 in FIG. 11 respectively. In addition, the job table 704 illustrated in FIG. 10 is stored in the job queue 204 in the user terminal 200.

Steps S31 to S35 in FIG. 13A are the same as steps S1 to S5 in FIG. 12A. Therefore, descriptions for those steps are omitted to avoid overlap.

In S36, after a user name and password are input on the operation unit 101 of the MFP 100N located at the branch by user operation, the operation unit 101 of the MFP 100N requests the authentication unit 102 in the MFP 100N to authenticate the user, and the authentication unit 102 transfers authentication information to the authentication manager 301 in the print information management apparatus 300 to request to authenticate the login user in S37.

After the authentication succeeds, if the member C logs in the MFP 100N in S38, the operation proceeds to S39, and it is determined whether or not the member C is the dynamic proxy user. In this case, the print information management apparatus 300 determines whether or not the member C is the dynamic proxy user based on the proxy management table 701 in FIG. 7.

If it is determined that the user who logged in the MFP 100N is the dynamic proxy user (YES in S39), the operation proceeds to S40, and it is determined whether or not location information of the member C corresponds to location information of the proxy request user. In this case, the print information management apparatus 300 determines whether or not the location information of the member C corresponds to the location information of the proxy request user based on the location information management table 705 in FIG. 11.

If it is determined that the location information of the member C corresponds to the location information of the proxy request user (YES in S40), the operation proceeds to S41, and user terminal identification information of the department manager A as the proxy request user is specified. In this embodiment, as illustrated in FIG. 11, the location information of the member C "the branch" corresponds to the location information of the department manager A. As a result, the user terminal identification information PC 1 of the department manager A is specified.

Regarding the location information of the member C, when the member C logs in the MFP 100N, the location information of the MFP 100N is transferred to the location information manager 304 in the print information management apparatus 300, and the location information of the member C stored in the location information manager 304 is updated from "the headquarters" to "the branch". Otherwise, when the member logs in his/her own user terminal PC 3 at the branch, it is possible to transfer the location information of the user terminal PC 3 to the location information manager 304 in the print information management apparatus 300 to update the location information of the member C stored in the location information manager 304 from "the headquarters" to "the branch".

Next, the operation proceeds to S42, and the user terminal manager 303 in the print information management apparatus 300 transfers the user terminal identification information PC 1 of the department manager A and the user name of the department manager A to the authentication unit 102 of the MFP 100N. Accordingly, the authentication unit 102 in the MFP 100N requests the job information acquisition unit 103 in the MFP 100N to acquire print data in S43.

After being requested to acquire print data, the job information acquisition unit 103 accesses the job queue 204 in the PC 1 and requests the PC 1 to transfer a job list in S44. Accordingly, the job queue 204 in the user terminal 200A returns the job list including a job ID to the job information acquisition unit 103 in the MFP 100N in S45.

After receiving the job list including the job ID, the job information acquisition unit 103 displays the job list of the department manager A on the operation unit 101 of the MFP 100N in S46. The job list transferred by the job information acquisition unit 103 is displayed on the display device included in the operation unit 101. With reference to the job list displayed on the display device, the member C selects an intended print job in S47.

Steps S48 to S51 in FIG. 13B are the same as steps S17 to S20 in FIG. 12B except performing printing by using the MFP 100N. Therefore, descriptions for those steps are omitted to avoid overlap.

If it is determined that the result is NO in S38, S39, and S40, the operation proceeds as is.

The print information processing system in this embodiment performs the operation as described above. As a result, at the branch, the member C may acquire the print output requested by the department manager A.

### A first example of the embodiment

In FIGs. 12A and 12B, any one of the general clerk B as the static proxy user and the members C, D, and E as the dynamic proxy user may perform printing the print data using the MFP 100M located at the headquarters by proxy stored in the user terminal 200 by the department manager A as the proxy request user. However, as illustrated in FIGs. 14A and 14B, regarding the MFP 100M located at the headquarters, it is possible that only the general clerk B as the static proxy user may perform printing by proxy. In this example, it is possible to enhance security of the print data stored in the user terminal 200 by the proxy request user.

### A second example of the embodiment

In FIG. 10, the print data (whose job IDs are 001 and 002) stored in the user terminal 200 located at the headquarters by the department manager A as the proxy request user is printed by proxy. As illustrated in FIG. 15, if new print data (whose job ID is 003) is stored in the user terminal 200 located at the branch by the department manager A as the proxy request user, the member C may print by proxy only the job ID 003 whose location information corresponds to the location information of the member C.

Regarding jobs registered at the headquarters before visiting the branch on business, those jobs have no relationship with the business visit, and it is possible that those jobs could be confidential to the member C. Therefore, the member C who visits the branch along with the department manager A may print jobs registered during the business visit only. As a result, it is possible to enhance security.

### A third example of the embodiment

In FIG. 1, the department manager A as the proxy request user owns only one user terminal 200. As illustrated in a user terminal management table 706 in FIG. 16, if the department manager A owns multiple user terminals PC 1 and PC 8, it is possible to perform printing by proxy by performing operations illustrated in FIGs. 12 to 14.

In this case, as illustrated in FIG. 17, location information for each of the multiple user terminals PC 1 and PC 8, source of location information, and acquired date/time (updated date/time) of location information are recorded in a location information management table 707. By regarding location information whose updated date/time is new as location information of the proxy request user, it is possible to regard a user terminal as an update destination of the location information whose updated date/time is new as a source of the print data.

In the embodiments described above, a print information management system that may enhance user-friendliness of an output apparatus ensuring security is provided.

The present invention also encompasses a carrier means such as a recording medium storing a program that executes an information processing method, performed by an information processing system, which includes an information processing apparatus that stores job data in a memory in accordance with a request from a first user, an output apparatus that outputs the job data, and an information managing apparatus connected to the information processing apparatus and the output apparatus via a network. The information processing method, performed by the information processing system, includes the steps of receiving user identification information for identifying the first user who logs in the output apparatus from the output apparatus, acquiring location information indicating a location of the first user who logged in the output apparatus based on the received user identification information, determining, if a second user who is allowed to output job data stored in accordance with the request from the first user logs in the output apparatus and the location information of the second user is acquired, whether the location of the first user corresponds to a location of the second user based on the location information of the first user and the location information of the second user, providing, if circuitry determines that the location of the first user corresponds to the location of the second user, specifying information for acquiring the job data stored in accordance with the request from the first user to the output apparatus that the second user logs in, transferring the user identification information for identifying the first user and the second user who logs in the output apparatus, acquiring, in accordance with a request from the second user who logs in the output apparatus, the job data based on the specifying information for acquiring the job data stored in accordance with the request from the first user provided by the information management apparatus, and outputting the acquired job data.

Numerous additional modifications and variations are possible in light of the above teachings. It is therefore to be understood that within the scope of the appended claims, the disclosure of the present invention may be practiced otherwise than as specifically described herein.

For example, elements and/or features of different illustrative embodiments may be combined with each other and/or substituted for each other within the scope of the appended claims.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information managing apparatus (300), coupled to an information processing apparatus (200) to store job data in a memory (512, 515) in accordance with a request from a first user, and an output apparatus (100M, 100N) to output the job data via a network (400), the information managing apparatus (300) comprising:
a receiver (607) to receive, from the output apparatus (100M, 100N), user identification information for identifying a user who logs in the output apparatus (100M, 100N) and
first circuitry (606) to:
acquire location information indicating a location of the user who logged in the output apparatus (100M, 100N) based on the received user identification information;
if a second user, who is allowed to output job data stored in accordance with the request from the first user, logs in the output apparatus (100M, 100N), determine, based on first location information and second location information, whether or not a predetermined correspondence exists between a first location, indicated by the first location information and which is the location of the first user, and a second location, indicated by the second location information and which is a location of the second user; and
provide, if it is determined that the location of the first user corresponds to the location of the second user, specifying information for acquiring the job data stored in accordance with the request from the first user to the output apparatus (100M, 100N) that the second user logs in,
wherein the first circuitry (606) in the information managing apparatus (300):
determines whether the second user who logs in the output apparatus (100M, 100N) is a static proxy user;
if it is determined that the second user is the static proxy user, provides the specifying information to the output apparatus (100M, 100N) even if the location of the first user does not correspond to the location of the second user;
if it is determined that the second user is not the static proxy user, determines whether the second user is a dynamic proxy user; and
if it is determined that the second user is the dynamic proxy user, provides the specifying information to the output apparatus (100M, 100N) if the location of the second user corresponds to the location of the first user.

2. An information processing system comprising an information managing apparatus (300) according to claim 1, and further comprising:
the information processing apparatus (200) to store job data in the memory (512, 515) in accordance with a request from the first user; and
the output apparatus (100M, 100N) to output the job data,
wherein the output apparatus (100M, 100N) includes:
a transmitter (504) to transfer the user identification information for identifying the user who logs in the output apparatus (100M, 100N); and
second circuitry (501) to:
acquire, in accordance with a request from the second user who logs in the output apparatus (100M, 100N), the job data based on the specifying information for acquiring the job data stored in accordance with the request from the first user provided by the information managing apparatus (300); and
output the acquired job data.

3. The information processing system according to claim 2,
wherein the first circuitry (606) in the information managing apparatus (300), if it is determined that the first location does not correspond to the second location, does not provide the specifying information for acquiring the job data stored in accordance with the request from the first user to the output apparatus (100M, 100N) that the second user logs in.

4. The information processing system according to any one of claims 2 to 3,
wherein the first circuitry (501) in the information processing apparatus (200) transfers the location information indicating a location of the information processing apparatus (200) to the information management apparatus (300) when the user commands to store the job data in the information processing apparatus (200),
the information management apparatus (300) further includes location information management means for storing location information indicating a location of a user in association with the user, and updates the stored location information based on the location information transferred from the information processing apparatus (200) or the location information acquired by the first circuitry (606),
wherein the location information management means:
stores the location information transmitted from the information processing apparatus (200) at a timing when the first user requests the storing of the job data in the information processing apparatus (200) as location information indicating a location of the first user;
in a case in which the stored location information of the first user is different from location information transmitted from the information processing apparatus (200) at a time when the first user again requests the storing of job data in the information processing apparatus (200) after a previous request for storing the job data, updates the location information of the first user to the transmitted location information; and
updates the stored location information of the second user to the second location information of the second user who logs in the output apparatus (100M, 100N), acquired by the first circuitry (606), and
the first circuitry (606) determines whether or not the first location corresponds to the second location, based on the first location information, which is location information of the first user stored by the location information management means at a timing when the second user logs in the output apparatus (100M, 100N) and the second location information.

5. The information processing system according to claim 4,
wherein the first circuitry (606) in the information managing apparatus (300), if the first user commands to store the job data using multiple information processing apparatuses (200), acquires information indicating a location of any one of the multiple information processing apparatuses (200) as the location information of the first user, based on information indicating when the first user commands to store the job data using the multiple information processing apparatuses (200).

6. The information processing system according to any one of claims 2 to 3,
where the second circuitry (501) in the output apparatus (100M, 100N), when the second user logs into the output apparatus (100M, 100N), transfers the identification information of the second user and information indicating a location of the output apparatus (100M, 100N) to the information managing apparatus (300), and
the first circuitry (606) in the information managing apparatus (300):
acquires the information indicating the location of the information processing apparatus (200), transferred from the first circuitry (501) in the information processing apparatus (200), as the location information of the first user, and the information indicating the location of the output apparatus (100M, 100N), transferred from the second circuitry (501) in the output apparatus (100M, 100N), as the location information of the second user, and
determines whether the location of the first user corresponds to the location of the second user based on the acquired location information of the first user and the acquired location information of the second user.

7. The information managing apparatus (300) according to claim 1,
wherein the first circuitry (606), if it is determined that the first location does not correspond to the second location, does not provide the specifying information for acquiring the job data stored in accordance with the request from the first user to the output apparatus (100M, 100N) that the second user logs in.

8. The information managing apparatus (300) according to any one of claims 1 or 7,
wherein the first circuitry (606):
acquires the information indicating the location of the information processing apparatus (200), transferred from the first circuitry (501) in the information processing apparatus (200), as the location information of the first user, and the information indicating the location of the output apparatus (100M, 100N), transferred from a second circuitry (501) in the output apparatus (100M, 100N), as the location information of the second user, and
determines whether the location of the first user corresponds to the location of the second user based on the acquired location information of the first user and the acquired location information of the second user.

9. The information managing apparatus (300) according to any one of claims 1 or 7,
wherein the first circuitry (501) in the information processing apparatus (200) transfers location information indicating a location of the information processing apparatus (200) to the information management apparatus (300) when the first user commands to store the job data in the information processing apparatus (200),
the information management apparatus (300) further includes location information management means for storing location information indicating a location of a user in association with the user, and updates the stored location information based on the location information transferred from the information processing apparatus (200) or the location information acquired by the first circuitry (606),
wherein the location information management means:
stores the location information transmitted from the information processing apparatus (200) at a timing when the first user requests the storing of the job data in the information processing apparatus (200) as location information indicating a location of the first user;
in a case in which the stored location information of the first user is different from location information transmitted from the information processing apparatus (200) at a time when the first user again requests the storing of job data in the information processing apparatus (200) after a previous request for storing the job data, updates the location information of the first user to the transmitted location information; and
updates the stored location information of the second user to the second location information of the second user who logs in the output apparatus (100M, 100N), acquired by the first circuitry (606), and
the first circuitry (606) determines whether or not the first location corresponds to the second location, based on the first location information, which is location information of the first user stored by the location information management means at a timing when the second user logs in the output apparatus (100M, 100N) and the second location information.

10. An information processing method for an information managing apparatus (300), an information processing apparatus (200), an output apparatus (100M, 100N) coupled with each other via a network (400), the information processing apparatus (200) to store job data in a memory (512, 515) in accordance with a request from a first user, and the output apparatus (100M, 100N) to output the job data, the method comprising:
receiving, from the output apparatus (100M, 100N), user identification information for identifying a user who logs in the output apparatus (100M, 100N);
acquiring location information indicating a location of the user who logged in the output apparatus (100M, 100N) based on the received user identification information;
determining, if a second user who is allowed to output job data stored in accordance with the request from the first user logs in the output apparatus (100M, 100N), based on first location information and second location information, whether or not a predetermined correspondence exists between a first location, indicated by the first location information and which is the location of the first user, and a second location, indicated by the second location information and which is a location of the second user;
providing, if first circuitry (606) determines that the location of the first user corresponds to the location of the second user, specifying information for acquiring the job data stored in accordance with the request from the first user to the output apparatus (100M, 100N) that the second user logs in, wherein providing specifying information comprises:
determining whether the second user who logs in the output apparatus (100M, 100N) is a static proxy user;
if it is determined that the second user is the static proxy user, providing the specifying information to the output apparatus (100M, 100N) even if the location of the first user does not correspond to the location of the second user;
if it is determined that the second user is not the static proxy user, determining whether the second user is a dynamic proxy user; and
if it is determined that the second user is the dynamic proxy user, providing the specifying information to the output apparatus (100M, 100N) if the location of the second user corresponds to the location of the first user;
transferring the user identification information for identifying the user who logs in the output apparatus (100M, 100N);
acquiring, in accordance with a request from the second user who logs in the output apparatus (100M, 100N), the job data based on the specifying information for acquiring the job data stored in accordance with the request from the first user provided by the information managing apparatus (300); and
outputting the acquired job data.

11. The information processing method according to claim 10, the method further comprising:
acquiring the information indicating the location of the information processing apparatus (200), transferred from circuitry (501) in the information processing apparatus (200), as the location information of the first user, and the information indicating the location of the output apparatus (100M, 100N), transferred from circuitry (501) in the output apparatus (100M, 100N), as the location information of the second user, and
determining whether the location of the first user corresponds to the location of the second user based on the acquired location information of the first user and the acquired location information of the second user.

12. The information processing method according to claim 10, the method further comprising:
transferring location information indicating a location of the information processing apparatus (200) to the information management apparatus (300) when the first user commands to store the job data in the information processing apparatus (200),
storing, in location information management means, location information indicating a location of a user in association with the user, and updating the stored location information based on the location information transferred from the information processing apparatus (200) or the location information acquired by the circuitry (606),
storing, in the location information management means, the location information transmitted from the information processing apparatus (200) at a timing when the first user requests the storing of the job data in the information processing apparatus (200) as location information indicating a location of the first user;
updating, in a case in which the stored location information of the first user is different from location information transmitted from the information processing apparatus (200) at a time when the first user again requests the storing of job data in the information processing apparatus (200) after a previous request for storing the job data, the location information of the first user to the transmitted location information; and
updating the stored location information of the second user to the second location information of the second user who logs in the output apparatus (100M, 100N), acquired by the circuitry (606), and
determining whether or not the first location corresponds to the second location, based on the first location information, which is location information of the first user stored by the location information management means at a timing when the second user logs in the output apparatus (100M, 100N) and the second location information.

## Patentansprüche

1. Informationsverwaltungsvorrichtung (300), die mit einer Informationsverarbeitungsvorrichtung (200), um Auftragsdaten in einem Speicher (512, 515) gemäß einer Anforderung von einem ersten Benutzer zu speichern, und mit einer Ausgabevorrichtung (100M, 100N), um die Auftragsdaten über ein Netzwerk (400) auszugeben, gekoppelt ist, wobei die Informationsverwaltungsvorrichtung (300) umfasst:
einen Empfänger (607), um von der Ausgabevorrichtung (100M, 100N) Benutzeridentifikationsinformationen zum Identifizieren eines Benutzers zu empfangen, der sich in die Ausgabevorrichtung (100M, 100N) einloggt, und
eine erste Schaltung (606), um:
Ortsinformationen, die einen Ort des Benutzers angeben, der sich in die Ausgabevorrichtung (100M, 100N) eingeloggt hat, basierend auf den empfangenen Benutzeridentifikationsinformationen zu erfassen;
wenn ein zweiter Benutzer, dem es erlaubt ist, Auftragsdaten auszugeben, die gemäß der Anforderung vom ersten Benutzer gespeichert sind, sich in die Ausgabevorrichtung (100M, 100N) einloggt, basierend auf ersten Ortsinformationen und zweiten Ortsinformationen zu bestimmen, ob eine vorbestimmte Entsprechung zwischen einem ersten Ort, der durch die ersten Ortsinformationen angezeigt wird und der der Ort des ersten Benutzers ist, und einem zweiten Ort, der durch die zweiten Ortsinformationen angezeigt wird und der ein Ort des zweiten Benutzers ist, besteht oder nicht; und
wenn bestimmt wird, dass der Ort des ersten Benutzers dem Ort des zweiten Benutzers entspricht, Spezifizierungsinformationen zum Erfassen der Auftragsdaten, die gemäß der Anforderung von dem ersten Benutzer gespeichert sind, an der Ausgabevorrichtung (100M, 100N), in die der zweite Benutzer sich einloggt, bereitzustellen,
wobei die erste Schaltung (606) in der Informationsverwaltungsvorrichtung (300):
bestimmt, ob der zweite Benutzer, der in die Ausgabevorrichtung (100M, 100N) einloggt, ein statischer Proxy-Benutzer ist;
wenn bestimmt wird, dass der zweite Benutzer der statische Proxy-Benutzer ist, die Spezifizierungsinformationen an der Ausgabevorrichtung (100M, 100N) bereitstellt, sogar wenn der Ort des ersten Benutzers nicht dem Ort des zweiten Benutzers entspricht;
wenn bestimmt wird, dass der zweite Benutzer nicht der statische Proxy-Benutzer ist, bestimmt, ob der zweite Benutzer ein dynamischer Proxy-Benutzer ist; und
wenn bestimmt wird, dass der zweite Benutzer der dynamische Proxy-Benutzer ist, die Spezifizierungsinformationen an der Ausgabevorrichtung (100M, 100N) bereitstellt, wenn der Ort des zweiten Benutzers dem Ort des ersten Benutzers entspricht.

2. Informationsverarbeitungssystem, umfassend eine Informationsverwaltungsvorrichtung (300) nach Anspruch 1, und ferner umfassend:
die Informationsverarbeitungsvorrichtung (200), um Auftragsdaten in dem Speicher (512, 515) gemäß einer Anforderung von dem ersten Benutzer zu speichern; und
die Ausgabevorrichtung (100M, 100N), um die Auftragsdaten auszugeben,
wobei die Ausgabevorrichtung (100M, 100N) einschließt:
einen Sender (504) zum Übertragen der Benutzeridentifikationsinformationen zum Identifizieren des Benutzers, der sich in die Ausgabevorrichtung (100M, 100N) einloggt; und
eine zweite Schaltung (501) um:
gemäß einer Anforderung von dem zweiten Benutzer, der sich in die Ausgabevorrichtung (100M, 100N) einloggt, die Auftragsdaten basierend auf den Spezifizierungsinformationen zum Erfassen der Auftragsdaten, die gemäß der Anforderung von dem ersten Benutzer gespeichert sind, die von der Informationsverwaltungsvorrichtung (300) bereitgestellt wird, zu erfassen; und
die erfassten Auftragsdaten auszugeben.

3. Informationsverarbeitungssystem nach Anspruch 2,
wobei die erste Schaltung (606) in der Informationsverwaltungsvorrichtung (300), wenn bestimmt wird, dass der erste Ort nicht dem zweiten Ort entspricht, die Spezifizierungsinformationen zum Erfassen der Auftragsdaten, die gemäß der Anforderung vom ersten Benutzer gespeichert sind, nicht an der Ausgabevorrichtung (100M, 100N) bereitstellt, in die der zweite Benutzer sich einloggt.

4. Informationsverarbeitungssystem nach einem der Ansprüche 2 bis 3,
wobei die erste Schaltung (501) in der Informationsverarbeitungsvorrichtung (200) die Ortsinformationen, die einen Ort der Informationsverarbeitungsvorrichtung (200) angeben, an die Informationsverwaltungsvorrichtung (300) überträgt, wenn der Benutzer befiehlt, die Auftragsdaten in der Informationsverarbeitungsvorrichtung (200) zu speichern,
die Informationsverwaltungsvorrichtung (300) ferner eine Ortsinformations-Verwaltungseinrichtung zum Speichern von Ortsinformationen einschließt, die einen Ort eines Benutzers in Verbindung mit dem Benutzer angeben, und die gespeicherten Ortsinformationen basierend auf den von der Informationsverarbeitungsvorrichtung (200) übertragenen Ortsinformationen oder den von der ersten Schaltung (606) erfassten Ortsinformationen aktualisiert,
wobei die Ortsinformations-Verwaltungseinrichtung:
die Ortsinformationen, die von der Informationsverarbeitungsvorrichtung (200) zu einem Zeitpunkt übertragen werden, zu dem der erste Benutzer die Speicherung der Auftragsdaten in der Informationsverarbeitungsvorrichtung (200) anfordert, als Ortsinformationen speichert, die einen Ort des ersten Benutzers angeben;
in einem Fall, in dem sich die gespeicherten Ortsinformationen des ersten Benutzers von den Ortsinformationen unterscheiden, die von der Informationsverarbeitungsvorrichtung (200) zu einem Zeitpunkt übertragen werden, wenn der erste Benutzer nach einer vorherigen Anforderung zum Speichern der Auftragsdaten erneut die Speicherung von Auftragsdaten in der Informationsverarbeitungsvorrichtung (200) anfordert, die Ortsinformationen des ersten Benutzers auf die übertragenen Ortsinformationen aktualisiert; und
die gespeicherten Ortsinformationen des zweiten Benutzers auf die zweiten Ortsinformationen des zweiten Benutzers, der sich in die Ausgabevorrichtung (100M, 100N) einloggt, die von der ersten Schaltung (606) erfasst werden, aktualisiert, und
die erste Schaltung (606) bestimmt, ob der erste Ort dem zweiten Ort entspricht oder nicht, basierend auf den ersten Ortsinformationen, die Ortsinformationen des ersten Benutzers sind, die von der Ortsinformations-Verwaltungseinrichtung zu einem Zeitpunkt gespeichert werden, zu dem der zweite Benutzer sich in die Ausgabevorrichtung (100M, 100N) einloggt, und den zweiten Ortsinformationen.

5. Informationsverarbeitungssystem nach Anspruch 4,
wobei die erste Schaltung (606) in der Informationsverwaltungsvorrichtung (300), wenn der erste Benutzer befiehlt, die Auftragsdaten unter Verwendung mehrerer Informationsverarbeitungsvorrichtungen (200) zu speichern, Informationen, die einen Ort einer der mehreren Informationsverarbeitungsvorrichtungen (200) angeben, als die Ortsinformationen des ersten Benutzers erfasst, basierend auf Informationen, die angeben, wenn der erste Benutzer befiehlt, die Auftragsdaten unter Verwendung der mehreren Informationsverarbeitungsvorrichtungen (200) zu speichern.

6. Informationsverarbeitungssystem nach einem der Ansprüche 2 bis 3,
wobei die zweite Schaltung (501) in der Ausgabevorrichtung (100M, 100N), wenn der zweite Benutzer sich in die Ausgabevorrichtung (100M, 100N) einloggt, die Identifikationsinformationen des zweiten Benutzers und Informationen, die einen Ort der Ausgabevorrichtung (100M, 100N) angeben, an die Informationsverwaltungsvorrichtung (300) überträgt, und
die erste Schaltung (606) in der Informationsverwaltungsvorrichtung (300):
die Informationen, die den Ort der Informationsverarbeitungsvorrichtung (200) angeben, die von der ersten Schaltung (501) in der Informationsverarbeitungsvorrichtung (200) übertragen wird, als die Ortsinformationen des ersten Benutzers erfasst, und die Informationen, die den Ort der Ausgabevorrichtung (100M, 100N) angeben, die von der zweiten Schaltung (501) in der Ausgabevorrichtung (100M, 100N) übertragen werden, als die Ortsinformationen des zweiten Benutzers erfasst, und
bestimmt, ob der Ort des ersten Benutzers dem Ort des zweiten Benutzers entspricht, basierend auf den erfassten Ortsinformationen des ersten Benutzers und den erfassten Ortsinformationen des zweiten Benutzers.

7. Informationsverwaltungsvorrichtung (300) nach Anspruch 1,
wobei die erste Schaltung (606), wenn bestimmt wird, dass der erste Ort nicht dem zweiten Ort entspricht, die Spezifizierungsinformationen zum Erfassen der Auftragsdaten, die gemäß der Anforderung vom ersten Benutzer gespeichert sind, nicht an der Ausgabevorrichtung (100M, 100N) bereitstellt, in die der zweite Benutzer sich einloggt.

8. Informationsverwaltungsvorrichtung (300) nach einem der Ansprüche 1 oder 7, wobei die erste Schaltung (606):
die Informationen, die den Ort der Informationsverarbeitungsvorrichtung (200) angeben, die von der ersten Schaltung (501) in der Informationsverarbeitungsvorrichtung (200) übertragen werden, als die Ortsinformationen des ersten Benutzers erfasst, und die Informationen, die den Ort der Ausgabevorrichtung (100M, 100N) angeben, die von einer zweiten Schaltung (501) in der Ausgabevorrichtung (100M, 100N) übertragen werden, als die Ortsinformationen des zweiten Benutzers erfasst, und
bestimmt, ob der Ort des ersten Benutzers dem Ort des zweiten Benutzers entspricht, basierend auf den erfassten Ortsinformationen des ersten Benutzers und den erfassten Ortsinformationen des zweiten Benutzers.

9. Informationsverwaltungsvorrichtung (300) nach einem der Ansprüche 1 oder 7,
wobei die erste Schaltung (501) in der Informationsverarbeitungsvorrichtung (200) Ortsinformationen, die einen Ort der Informationsverarbeitungsvorrichtung (200) angeben, an die Informationsverwaltungsvorrichtung (300) überträgt, wenn der erste Benutzer das Speichern der Auftragsdaten in der Informationsverarbeitungsvorrichtung (200) anfordert,
die Informationsverwaltungsvorrichtung (300) ferner eine Ortsinformations-Verwaltungseinrichtung zum Speichern von Ortsinformationen einschließt, die einen Ort eines Benutzers in Verbindung mit dem Benutzer angeben, und die gespeicherten Ortsinformationen auf der Grundlage der von der Informationsverarbeitungsvorrichtung (200) übertragenen Ortsinformationen oder der von der ersten Schaltung (606) erfassten Ortsinformationen aktualisiert,
wobei die Ortsinformations-Verwaltungseinrichtung:
die Ortsinformationen, die von der Informationsverarbeitungsvorrichtung (200) zu einem Zeitpunkt übertragen werden, zu dem der erste Benutzer die Speicherung der Auftragsdaten in der Informationsverarbeitungsvorrichtung (200) anfordert, als Ortsinformationen speichert, die einen Ort des ersten Benutzers angeben;
in einem Fall, in dem sich die gespeicherten Ortsinformationen des ersten Benutzers von den Ortsinformationen unterscheiden, die von der Informationsverarbeitungsvorrichtung (200) zu einem Zeitpunkt übertragen werden, wenn der erste Benutzer nach einer vorherigen Anforderung zum Speichern der Auftragsdaten erneut die Speicherung von Auftragsdaten in der Informationsverarbeitungsvorrichtung (200) anfordert, die Ortsinformationen des ersten Benutzers auf die übertragenen Ortsinformationen aktualisiert; und
die gespeicherten Ortsinformationen des zweiten Benutzers auf die zweiten Ortsinformationen des zweiten Benutzers, der sich in die Ausgabevorrichtung (100M, 100N) einloggt, die von der ersten Schaltung (606) erfasst werden, aktualisiert, und
die erste Schaltung (606) bestimmt, ob der erste Ort dem zweiten Ort entspricht oder nicht, basierend auf den ersten Ortsinformationen, die Ortsinformationen des ersten Benutzers sind, die von der Ortsinformations-Verwaltungseinrichtung zu einem Zeitpunkt gespeichert werden, zu dem der zweite Benutzer sich in die Ausgabevorrichtung (100M, 100N) einloggt, und den zweiten Ortsinformationen.

10. Informationsverarbeitungsverfahren für eine Informationsverwaltungsvorrichtung (300), eine Informationsverarbeitungsvorrichtung (200), eine Ausgabevorrichtung (100M, 100N), die über ein Netzwerk (400) miteinander gekoppelt sind, wobei die Informationsverarbeitungsvorrichtung (200) Auftragsdaten in einem Speicher (512, 515) gemäß einer Anforderung von einem ersten Benutzer speichert und die Ausgabevorrichtung (100M, 100N) die Auftragsdaten ausgibt, wobei das Verfahren umfasst:
Empfangen von Benutzeridentifikationsinformationen von der Ausgabevorrichtung (100M, 100N) zum Identifizieren eines Benutzers, der sich in die Ausgabevorrichtung (100M, 100N) einloggt;
Erfassen von Ortsinformationen, die einen Ort des Benutzers angeben, der sich in die Ausgabevorrichtung (100M, 100N) einloggt hat, basierend auf den empfangenen Benutzeridentifikationsinformationen;
Bestimmen, wenn ein zweiter Benutzer, dem es erlaubt ist, Auftragsdaten auszugeben, die gemäß der Anforderung vom ersten Benutzer gespeichert sind, sich in die Ausgabevorrichtung (100M, 100N) einloggt, basierend auf den ersten Ortsinformationen und den zweiten Ortsinformationen, ob eine vorbestimmte Entsprechung zwischen einem ersten Ort, der durch die ersten Ortsinformationen angegeben wird und der der Ort des ersten Benutzers ist, und einem zweiten Ort, der durch die zweiten Ortsinformationen angegeben wird und der ein Ort des zweiten Benutzers ist, existiert oder nicht;
Bereitstellen, wenn die erste Schaltung (606) bestimmt, dass der Ort des ersten Benutzers dem Ort des zweiten Benutzers entspricht, von Spezifizierungsinformationen zum Erfassen der Auftragsdaten, die gemäß der Anforderung vom ersten Benutzer gespeichert sind, an der Ausgabevorrichtung (100M, 100N), in die der zweite Benutzer sich einloggt, wobei das Bereitstellen von Spezifizierungsinformationen umfasst:
Bestimmen, ob der zweite Benutzer, der sich in die Ausgabevorrichtung (100M, 100N) einloggt, ein statischer Proxy-Benutzer ist;
wenn bestimmt wird, dass der zweite Benutzer der statische Proxy-Benutzer ist, Bereitstellen der Spezifizierungsinformationen an der Ausgabevorrichtung (100M, 100N), sogar wenn der Ort des ersten Benutzers nicht dem Ort des zweiten Benutzers entspricht;
wenn bestimmt wird, dass der zweite Benutzer nicht der statische Proxy-Benutzer ist, Bestimmen, ob der zweite Benutzer ein dynamischer Proxy-Benutzer ist; und
wenn bestimmt wird, dass der zweite Benutzer der dynamische Proxy-Benutzer ist, Bereitstellen der Spezifizierungsinformationen an der Ausgabevorrichtung (100M, 100N), wenn der Ort des zweiten Benutzers dem Ort des ersten Benutzers entspricht;
Übertragen der Benutzeridentifikationsinformationen zum Identifizieren des Benutzers, der sich in die Ausgabevorrichtung (100M, 100N) einloggt;
Erfassen, gemäß einer Anforderung vom zweiten Benutzer, der sich in die Ausgabevorrichtung (100M, 100N) einloggt, der Auftragsdaten basierend auf den Spezifizierungsinformationen zum Erfassen der Auftragsdaten, die gemäß der Anforderung vom ersten Benutzer gespeichert sind, die von der Informationsverwaltungsvorrichtung (300) bereitgestellt wird; und
Ausgeben der erfassten Auftragsdaten.

11. Informationsverarbeitungsverfahren nach Anspruch 10, wobei das Verfahren ferner umfasst:
Erfassen der den Ort der Informationsverarbeitungsvorrichtung (200) angebenden Informationen, die von einer Schaltung (501) in der Informationsverarbeitungsvorrichtung (200) übertragen werden, als die Ortsinformationen des ersten Benutzers, und der den Ort der Ausgabevorrichtung (100M, 100N) angebenden Informationen, die von einer Schaltung (501) in der Ausgabevorrichtung (100M, 100N) übertragen werden, als die Ortsinformationen des zweiten Benutzers, und
Bestimmen, ob der Ort des ersten Benutzers dem Ort des zweiten Benutzers entspricht, basierend auf den erfassten Ortsinformationen des ersten Benutzers und den erfassten Ortsinformationen des zweiten Benutzers.

12. Informationsverarbeitungsverfahren nach Anspruch 10, wobei das Verfahren ferner umfasst:
Übertragen von Ortsinformationen, die einen Ort der Informationsverarbeitungsvorrichtung (200) angeben, an die Informationsverwaltungsvorrichtung (300), wenn der erste Benutzer befiehlt, die Auftragsdaten in der Informationsverarbeitungsvorrichtung (200) zu speichern,
Speichern, in einer Ortsinformations-Verwaltungseinrichtung, von Ortsinformationen, die einen Ort eines Benutzers in Verbindung mit dem Benutzer angeben, und Aktualisieren der gespeicherten Ortsinformationen basierend auf den von der Informationsverarbeitungsvorrichtung (200) übertragenen Ortsinformationen oder den von der Schaltung (606) erfassten Ortsinformationen,
Speichern, in der Ortsinformations-Verwaltungseinrichtung, der Ortsinformationen, die von der Informationsverarbeitungsvorrichtung (200) zu einem Zeitpunkt übertragen werden, zu dem der erste Benutzer die Speicherung der Auftragsdaten in der Informationsverarbeitungsvorrichtung (200) anfordert, als Ortsinformationen, die einen Ort des ersten Benutzers angeben;
Aktualisieren, in einem Fall, in dem sich die gespeicherten Ortsinformationen des ersten Benutzers von den Ortsinformationen unterscheiden, die von der Informationsverarbeitungsvorrichtung (200) zu einem Zeitpunkt übertragen werden, zu dem der erste Benutzer erneut die Speicherung von Auftragsdaten in der Informationsverarbeitungsvorrichtung (200) nach einer vorherigen Anforderung zum Speichern der Auftragsdaten anfordert, der Ortsinformationen des ersten Benutzers auf die übertragenen Ortsinformationen; und
Aktualisieren der gespeicherten Ortsinformationen des zweiten Benutzers auf die zweiten Ortsinformationen des zweiten Benutzers, der sich in die Ausgabevorrichtung (100M, 100N) einloggt, die durch die Schaltung (606) erfasst werden, und
Bestimmen, ob der erste Ort dem zweiten Ort entspricht oder nicht, basierend auf den ersten Ortsinformationen, die Ortsinformationen des ersten Benutzers sind, die durch die Ortsinformations-Verwaltungseinrichtung zu einem Zeitpunkt gespeichert werden, wenn der zweite Benutzer sich in die Ausgabevorrichtung (100M, 100N) einloggt, und den zweiten Ortsinformationen.

## Revendications

1. Appareil de gestion d'informations (300), couplé à un appareil de traitement d'informations (200), pour stocker des données de tâche dans une mémoire (512, 515) conformément à une requête en provenance d'un premier utilisateur, et à un appareil de sortie (100M, 100N) pour émettre en sortie les données de tâche via un réseau (400), l'appareil de gestion d'informations (300) comprenant :
un récepteur (607) pour recevoir, en provenance de l'appareil de sortie (100M, 100N), des informations d'identification d'utilisateur pour identifier un utilisateur qui se connecte à l'appareil de sortie (100M, 100N) ; et
un premier circuit (606) pour :
acquérir des informations de localisation qui indiquent une localisation de l'utilisateur qui s'est connecté à l'appareil de sortie (100M, 100N) sur la base des informations d'identification d'utilisateur reçues ;
si un second utilisateur, qui est autorisé à émettre en sortie des données de tâche qui sont stockées conformément à la requête en provenance du premier utilisateur, se connecte à l'appareil de sortie (100M, 100N), déterminer, sur la base de premières informations de localisation et de secondes informations de localisation, si oui ou non une correspondance prédéterminée existe entre une première localisation, qui est indiquée par les premières informations de localisation et qui est la localisation du premier utilisateur, et une seconde localisation, qui est indiquée par les secondes informations de localisation et qui est une localisation du second utilisateur ; et
fournir, s'il est déterminé que la localisation du premier utilisateur correspond à la localisation du second utilisateur, des informations de spécification pour acquérir les données de tâche qui sont stockées conformément à la requête en provenance du premier utilisateur à l'appareil de sortie (100M, 100N) auquel le second utilisateur se connecte ;
dans lequel le premier circuit (606) dans l'appareil de gestion d'informations (300) :
détermine si oui ou non le second utilisateur qui se connecte à l'appareil de sortie (100M, 100N) est un utilisateur proxy statique ;
s'il est déterminé que le second utilisateur est l'utilisateur proxy statique, fournit les informations de spécification à l'appareil de sortie (100M, 100N) même si la localisation du premier utilisateur ne correspond pas à la localisation du second utilisateur ;
s'il est déterminé que le second utilisateur n'est pas l'utilisateur proxy statique, détermine si oui ou non le second utilisateur est un utilisateur proxy dynamique ; et
s'il est déterminé que le second utilisateur est l'utilisateur proxy dynamique, fournit les informations de spécification à l'appareil de sortie (100M, 100N) si la localisation du second utilisateur correspond à la localisation du premier utilisateur.

2. Système de traitement d'informations comprenant un appareil de gestion d'informations (300) selon la revendication 1, et comprenant en outre :
l'appareil de traitement d'informations (200) pour stocker des données de tâche dans la mémoire (512, 515) conformément à une requête en provenance du premier utilisateur ; et
l'appareil de sortie (100M, 100N) pour émettre en sortie les données de tâche ;
dans lequel l'appareil de sortie (100M, 100N) inclut :
un émetteur (504) pour transférer les informations d'identification d'utilisateur pour identifier l'utilisateur qui se connecte à l'appareil de sortie (100M, 100N) ; et
un second circuit (501) pour :
acquérir, conformément à une requête en provenance du second utilisateur qui se connecte à l'appareil de sortie (100M, 100N), les données de tâche sur la base des informations de spécification pour acquérir les données de tâche qui sont stockées conformément à la requête en provenance du premier utilisateur qui est fournie par l'appareil de gestion d'informations (300) ; et
émettre en sortie les données de tâche acquises.

3. Système de traitement d'informations selon la revendication 2,
dans lequel le premier circuit (606) dans l'appareil de gestion d'informations (300), s'il est déterminé que la première localisation ne correspond pas à la seconde localisation, ne fournit pas les informations de spécification pour acquérir les données de tâche, qui sont stockées conformément à la requête en provenance du premier utilisateur, à l'appareil de sortie (100M, 100N) auquel le second utilisateur se connecte.

4. Système de traitement d'informations selon l'une quelconque des revendications 2 et 3,
dans lequel le premier circuit (501) dans l'appareil de traitement d'informations (200) transfère les informations de localisation qui indiquent une localisation de l'appareil de traitement d'informations (200) à l'appareil de gestion d'informations (300) lorsque l'utilisateur donne l'ordre de stocker les données de tâche dans l'appareil de traitement d'informations (200) ;
l'appareil de gestion d'informations (300) inclut en outre un moyen de gestion d'informations de localisation pour stocker des informations de localisation qui indiquent une localisation d'un utilisateur en association avec l'utilisateur, et met à jour les informations de localisation stockées sur la base de les informations de localisation qui sont transférées depuis l'appareil de traitement d'informations (200) ou sur la base des informations de localisation qui sont acquises par le premier circuit (606) ;
dans lequel le moyen de gestion d'informations de localisation :
stocke les informations de localisation qui sont transmises depuis l'appareil de traitement d'informations (200) à un instant auquel le premier utilisateur demande en requête le stockage des données de tâche dans l'appareil de traitement d'informations (200) en tant qu'informations de localisation qui indiquent une localisation du premier utilisateur ;
dans un cas dans lequel les informations de localisation stockées du premier utilisateur sont différentes des informations de localisation qui sont transmises depuis l'appareil de traitement d'informations (200) à un instant auquel le premier utilisateur demande à nouveau en requête le stockage de données de tâche dans l'appareil de traitement d'informations (200) après une requête antérieure pour stocker les données de tâche, met à jour les informations de localisation du premier utilisateur selon les informations de localisation transmises ; et
met à jour les informations de localisation stockées du second utilisateur selon les secondes informations de localisation du second utilisateur qui se connecte à l'appareil de sortie (100M, 100N), lesquelles informations de localisation sont acquises par le premier circuit (606) ; et
le premier circuit (606) détermine si oui ou non la première localisation correspond à la seconde localisation, sur la base des premières informations de localisation, lesquelles sont des informations de localisation du premier utilisateur qui sont stockées par le moyen de gestion d'informations de localisation à un instant auquel le second utilisateur se connecte à l'appareil de sortie (100M, 100N), et sur la base des secondes informations de localisation.

5. Système de traitement d'informations selon la revendication 4,
dans lequel le premier circuit (606) dans l'appareil de gestion d'informations (300), si le premier utilisateur donne l'ordre de stocker les données de tâche en utilisant de multiples appareils de traitement d'informations (200), acquiert des informations qui indiquent une localisation de l'un quelconque des multiples appareils de traitement d'informations (200) en tant qu'informations de localisation du premier utilisateur, sur la base d'informations qui indiquent lorsque le premier utilisateur donne l'ordre de stocker les données de tâche en utilisant les multiples appareils de traitement d'informations (200).

6. Système de traitement d'informations selon l'une quelconque des revendications 2 à 3,
dans lequel le second circuit (501) dans l'appareil de sortie (100M, 100N), lorsque le second utilisateur se connecte à l'appareil de sortie (100M, 100N), transfère les informations d'identification du second utilisateur et des informations qui indiquent une localisation de l'appareil de sortie (100M, 100N) à l'appareil de gestion d'informations (300) ; et
le premier circuit (606) dans l'appareil de gestion d'informations (300) :
acquiert les informations qui indiquent la localisation de l'appareil de traitement d'informations (200), lesquelles sont transférées depuis le premier circuit (501) dans l'appareil de traitement d'informations (200), en tant qu'informations de localisation du premier utilisateur, et les informations qui indiquent la localisation de l'appareil de sortie (100M, 100N), lesquelles sont transférées depuis le second circuit (501) dans l'appareil de sortie (100M, 100N), en tant qu'informations de localisation du second utilisateur ; et
détermine si oui ou non la localisation du premier utilisateur correspond à la localisation du second utilisateur sur la base des informations de localisation acquises du premier utilisateur et des informations de localisation acquises du second utilisateur.

7. Appareil de gestion d'informations (300) selon la revendication 1,
dans lequel le premier circuit (606), s'il est déterminé que la première localisation ne correspond pas à la seconde localisation, ne fournit pas les informations de spécification pour acquérir les données de tâche, qui sont stockées conformément à la requête en provenance du premier utilisateur, à l'appareil de sortie (100M, 100N) auquel le second utilisateur se connecte.

8. Appareil de gestion d'informations (300) selon l'une quelconque des revendications 1 ou 7,
dans lequel le premier circuit (606) :
acquiert les informations qui indiquent la localisation de l'appareil de traitement d'informations (200), lesquelles sont transférées depuis le premier circuit (501) dans l'appareil de traitement d'informations (200), en tant qu'informations de localisation du premier utilisateur, et les informations qui indiquent la localisation de l'appareil de sortie (100M, 100N), lesquelles sont transférées depuis un second circuit (501) dans l'appareil de sortie (100M, 100N), en tant qu'informations de localisation du second utilisateur ; et
détermine si oui ou non la localisation du premier utilisateur correspond à la localisation du second utilisateur sur la base des informations de localisation acquises du premier utilisateur et des informations de localisation acquises du second utilisateur.

9. Appareil de gestion d'informations (300) selon l'une quelconque des revendications 1 ou 7,
dans lequel le premier circuit (501) dans l'appareil de traitement d'informations (200) transfère des informations de localisation qui indiquent une localisation de l'appareil de traitement d'informations (200) à l'appareil de gestion d'informations (300) lorsque le premier utilisateur donne l'ordre de stocker les données de tâche dans l'appareil de traitement d'informations (200) ;
l'appareil de gestion d'informations (300) inclut en outre un moyen de gestion d'informations de localisation pour stocker des informations de localisation qui indiquent une localisation d'un utilisateur en association avec l'utilisateur, et met à jour les informations de localisation stockées sur la base des informations de localisation qui sont transférées depuis l'appareil de traitement d'informations (200) ou sur la base des informations de localisation qui sont acquises par le premier circuit (606) ;
dans lequel le moyen de gestion d'informations de localisation :
stocke les informations de localisation qui sonts transmise depuis l'appareil de traitement d'informations (200) à un instant auquel le premier utilisateur demande en requête le stockage des données de tâche dans l'appareil de traitement d'informations (200) en tant qu'informations de localisation qui indiquent une localisation du premier utilisateur ;
dans un cas dans lequel les informations de localisation stockée du premier utilisateur sont différentes des informations de localisation qui sont transmises depuis l'appareil de traitement d'informations (200) à un instant auquel le premier utilisateur demande à nouveau en requête le stockage de données de tâche dans l'appareil de traitement d'informations (200) après une requête antérieure pour stocker les données de tâche, met à jour les informations de localisation du premier utilisateur selon les informations de localisation transmises ; et
met à jour les informations de localisation stockées du second utilisateur selon les secondes informations de localisation du second utilisateur qui se connecte à l'appareil de sortie (100M, 100N), lesquelles sont acquises par le premier circuit (606) ; et
le premier circuit (606) détermine si oui ou non la première localisation correspond à la seconde localisation, sur la base des premières informations de localisation, lesquelles sont des informations de localisation du premier utilisateur qui sont stockées par le moyen de gestion d'informations de localisation à un instant auquel le second utilisateur se connecte à l'appareil de sortie (100M, 100N), et sur la base des secondes informations de localisation.

10. Procédé de traitement d'informations pour un appareil de gestion d'informations (300), un appareil de traitement d'informations (200) et un appareil de sortie (100M, 100N) qui sont couplés les uns aux autres via un réseau (400), l'appareil de traitement d'informations (200) ayant pour objet de stocker des données de tâche dans une mémoire (512, 515) conformément à une requête en provenance d'un premier utilisateur, et l'appareil de sortie (100M, 100N) ayant pour objet d'émettre en sortie les données de tâche, le procédé comprenant :
la réception, en provenance de l'appareil de sortie (100M, 100N), d'informations d'identification d'utilisateur pour identifier un utilisateur qui se connecte à l'appareil de sortie (100M, 100N) ;
l'acquisition d'informations de localisation qui indiquent une localisation de l'utilisateur qui s'est connecté à l'appareil de sortie (100M, 100N), sur la base des informations d'identification d'utilisateur reçues ;
la détermination, si un second utilisateur qui est autorisé à émettre en sortie des données de tâche qui sont stockées conformément à la requête en provenance du premier utilisateur se connecte à l'appareil de sortie (100M, 100N), sur la base des premières informations de localisation et des secondes informations de localisation, de si oui ou non une correspondance prédéterminée existe entre une première localisation, qui est indiquée par les premières informations de localisation et qui est la localisation du premier utilisateur, et une seconde localisation, qui est indiquée par les secondes informations de localisation et qui est une localisation du second utilisateur ;
la fourniture, si le premier circuit (606) détermine que la localisation du premier utilisateur correspond à la localisation du second utilisateur, d'informations de spécification pour acquérir les données de tâche qui sont stockées conformément à la requête en provenance du premier utilisateur à l'appareil de sortie (100M, 100N) auquel le second utilisateur se connecte, dans lequel la fourniture des informations de spécification comprend :
la détermination de si oui ou non le second utilisateur qui se connecte à l'appareil de sortie (100M, 100N) est un utilisateur proxy statique ;
s'il est déterminé que le second utilisateur est l'utilisateur proxy statique, la fourniture des informations de spécification à l'appareil de sortie (100M, 100N) même si la localisation du premier utilisateur ne correspond pas à la localisation du second utilisateur ;
s'il est déterminé que le second utilisateur n'est pas l'utilisateur proxy statique, la détermination de si oui ou non le second utilisateur est un utilisateur proxy dynamique ; et
s'il est déterminé que le second utilisateur est l'utilisateur proxy dynamique, la fourniture des informations de spécification à l'appareil de sortie (100M, 100N) si la localisation du second utilisateur correspond à la localisation du premier utilisateur ;
le transfert des informations d'identification d'utilisateur pour identifier l'utilisateur qui se connecte à l'appareil de sortie (100M, 100N) ;
l'acquisition, conformément à une requête en provenance du second utilisateur qui se connecte à l'appareil de sortie (100M, 100N), des données de tâche sur la base des informations de spécification pour acquérir les données de tâche qui sont stockées conformément à la requête en provenance du premier utilisateur qui est fournie par l'appareil de gestion d'informations (300) ; et
l'émission en sortie des données de tâche acquises.

11. Procédé de traitement d'informations selon la revendication 10, le procédé comprenant en outre :
l'acquisition des informations qui indiquent la localisation de l'appareil de traitement d'informations (200), lesquelles sont transférées depuis un circuit (501) dans l'appareil de traitement d'informations (200), en tant qu'informations de localisation du premier utilisateur, et des informations qui indiquent la localisation de l'appareil de sortie (100M, 100N), lesquelles sont transférées depuis un circuit (501) dans l'appareil de sortie (100M, 100N), en tant qu'informations de localisation du second utilisateur ; et
la détermination de si oui ou non la localisation du premier utilisateur correspond à la localisation du second utilisateur sur la base des informations de localisation acquises du premier utilisateur et des informations de localisation acquises du second utilisateur.

12. Procédé de traitement d'informations selon la revendication 10, le procédé comprenant en outre :
le transfert d'informations de localisation qui indiquent une localisation de l'appareil de traitement d'informations (200) à l'appareil de gestion d'informations (300) lorsque le premier utilisateur donne l'ordre de stocker les données de tâche dans l'appareil de traitement d'informations (200) ;
le stockage, dans un moyen de gestion d'informations de localisation, d'informations de localisation qui indiquent une localisation d'un utilisateur en association avec l'utilisateur, et la mise à jour des informations de localisation stockées sur la base des informations de localisation qui sont transférées depuis l'appareil de traitement d'informations (200) ou sur la base des informations de localisation qui sont acquises par le circuit (606) ;
le stockage, dans le moyen de gestion d'informations de localisation, des informations de localisation qui sont transmises depuis l'appareil de traitement d'informations (200) à un instant auquel le premier utilisateur demande en requête de stocker les données de tâche dans l'appareil de traitement d'informations (200) en tant qu'informations de localisation qui indiquent une localisation du premier utilisateur ;
la mise à jour, dans un cas dans lequel les informations de localisation stockées du premier utilisateur sont différentes des informations de localisation qui sont transmises depuis l'appareil de traitement d'informations (200) à un instant auquel le premier utilisateur demande à nouveau en requête le stockage de données de tâche dans l'appareil de traitement d'informations (200) après une requête antérieure pour stocker les données de tâche, des informations de localisation du premier utilisateur selon les informations de localisation transmises ; et
la mise à jour des informations de localisation stockées du second utilisateur selon les secondes informations de localisation du second utilisateur qui se connecte à l'appareil de sortie (100M, 100N), lesquelles sont acquises par le circuit (606) ; et
la détermination de si oui ou non la première localisation correspond à la seconde localisation, sur la base des premières informations de localisation, lesquelles sont des informations de localisation du premier utilisateur qui sont stockées par le moyen de gestion d'informations de localisation à un instant auquel le second utilisateur se connecte à l'appareil de sortie (100M 100N), et sur la base des secondes informations de localisation.
